# EUROPÄISCHE PATENTSCHRIFT

(11) **EP 3 924 240 B1**
(45) Veröffentlichungstag und Bekanntmachung des Hinweises auf die Patenterteilung: **20.08.2025**
(21) Anmeldenummer: 20703138.6
(22) Anmeldetag: 29.01.2020
(51) Int. Cl.: G01P 3/36, G01P 21/02, G01S 13/60, G01S 13/86, G01S 17/58, B61L 25/02

(54) **ANLAGE MIT AUF EINER VERFAHRFLÄCHE DER ANLAGE BEWEGBAREM MOBILTEIL**
SYSTEM HAVING A MOBILE PART MOVABLE ON A TRAVEL SURFACE OF THE SYSTEM
INSTALLATION DOTÉE D'UNE PARTIE MOBILE POUVANT ÊTRE DÉPLACÉE SUR UNE SURFACE DE DÉPLACEMENT DE L'INSTALLATION

(30) Priorität: 12.02.2019 DE 102019000979
(43) Veröffentlichungstag der Anmeldung: 22.12.2021
(73) Patentinhaber: SEW-EURODRIVE GmbH & Co. KG, 76646 Bruchsal (DE)
(72) Erfinder: EPP, Mario, 69245 Bammental (DE); PRZYGODA, Christoph, 76646 Bruchsal (DE)
(86) Internationale Anmeldenummer: PCT/EP2020/025036
(87) Internationale Veröffentlichungsnummer: WO 2020/164796

(56) Entgegenhaltungen:
- DE-A1- 102005 046 456
- DE-A1- 102010 045 720
- DE-A1- 102016 223 435

## Beschreibung

Die Erfindung betrifft eine Anlage mit auf einer Verfahrfläche der Anlage bewegbarem Mobilteil.

Es ist allgemein bekannt, dass ein Mobilteil auf einer Verfahrfläche verfahrbar ist. Mobilteile, welche auf einer Schiene verfahrbar sind, werden Schienenfahrzeuge genannt.

Aus der DE 10 2005 046 456 A1 ist als nächstliegender Stand der Technik ein Verfahren zur Bestimmung des Orts von sich bewegenden Objekten bekannt.

Aus der US 2017 / 0 057 528 A1 ist ein Lokalisierungssystem für ein Schienenfahrzeug bekannt.

Aus der DE 10 2017 212 955 A1 ist eine Ermittlung der Geschwindigkeit eines Schienenfahrzeugs mit Hilfe einer bordeigenen Kamera bekannt.

Aus der EP 1 418 109 A1 ist ein Verfahren zur Lagebestimmung bekannt.

Aus der EP 1 473 210 A1 ist ein Verfahren zur Pulsbreitenfehlerkennung bekannt.

**Aus der** DE 10 2005 046 456 A1 **ist als nächstliegender Stand der Technik ein Verfahren zur Bestimmung des Orts von sich bewegenden Objekten bekannt.**

**Aus der** DE 10 2010 045 720 A1 **ist eine Überwachung von Messanordnungen mit Messwertgebern zur Ermittlung von Drehzahlwerten in Schienenfahrzeugen bekannt.**

**Aus der** DE 10 2016 223 435 A1 **ist eine Wegstrecken- und Geschwindigkeitesmessung mit Hilfe von Bildaufnahmen bekannt.**

Der Erfindung liegt daher die Aufgabe zugrunde, eine Anlage weiterzubilden, wobei die Sicherheit verbessert sein soll.

Erfindungsgemäß wird die Aufgabe bei der Anlage nach den in Anspruch 1 angegebenen Merkmalen gelöst.

Von Vorteil ist dabei, dass die Erfassung der Geschwindigkeit mittels zweier unterschiedlich arbeitender Sensoren erfasst wird und somit die Sicherheit erhöht ist. Hierzu wird außerdem ein Kreuzvergleich der bestimmten Geschwindigkeitswerte ausgeführt. Die Bestimmung der Geschwindigkeit ist somit mit erhöhter Sicherheit ermöglicht. Wird eine unzulässig große Abweichung der bestimmten Werte festgestellt, wird der Befehl zum Einleiten eines sicheren Zustandes, insbesondere ein Abschaltsignal und/oder STO-Signal, erzeugt.

Bei einer vorteilhaften Ausgestaltung ist die Verfahrfläche eine zweidimensionale Fläche, insbesondere der Boden der Anlage. Von Vorteil ist dabei, dass das mobilteil als intralogistisches Fahrzeug ausführbar ist und somit die Geschwindigkeit zweidimensional erfasst wird, da der Geschwindigkeitsvektor des Mobilteils parallel zur Verfahrebene ausgerichtet ist.

Bei einer vorteilhaften Ausgestaltung ist die Verfahrfläche eine Schiene und das Mobilteil ein auf der Schiene bewegbares Schienenfahrzeug. Von Vorteil ist dabei, dass die Erfindung auch bei Schienenfahrzeugen anwendbar ist und somit eine sichere Bestimmung des zugehörigen eindimensionalen Geschwindigkeitsvektors mit hoher Genauigkeit ausführbar ist.

Erfindungsgemäß ist der erste Sensor ein Radarsensor und der zweite Sensor ein Lichtsensor,
wobei die vom Lichtsensor gesendeten und empfangenen Lichtstrahlen durch einen transparenten Bereich des Gehäuses durchdringen. Von Vorteil ist dabei, dass der Radarsensor unterschiedlich zum Lichtsensor wirkt. Insbesondere durchdringt die Radarstrahlung das aus Kunststoff gefertigte Gehäuse. Der Lichtsensor sendet Licht aus, welches von der Verfahrfläche reflektiert wird, und detektiert das reflektierte Licht zur Bestimmung der Geschwindigkeit.

Bei einer vorteilhaften Ausgestaltung ist innerhalb des Gehäuses ein dritter Sensor angeordnet, der nach einem dritten physikalischen Wirkprinzip arbeitet, das unterschiedliche ist zum ersten und zum zweiten Wirkprinzip ist. Von Vorteil ist dabei, dass eine weiter erhöhte Sicherheit durch einen weiteren vergleich und Überwachung auf Überschreiten eines zulässigen Maßes an Abweichung von den mittels der Sensorsignale der beiden anderen Sensoren bestimmten Geschwindigkeit. Vorzugsweise wird der dritte Sensor als Beschleunigungssensor ausgeführt, dessen erfasste Beschleunigungswerte zeitlich integriert werden zur Bestimmung der Geschwindigkeit.

Bei einer vorteilhaften Ausgestaltung bestimmt die zweite Rechnereinheit aus dem Sensorsignal des ersten Sensors einen dritten Wert der Geschwindigkeit des Mobilteils, insbesondere und auf Überschreiten eines zulässigen Maßes an Abweichung vom ersten und/oder zweiten Wert überwacht. Von Vorteil ist dabei, dass die Sicherheit durch diese Überwachung erhöht ist und somit eine entsprechende Freigabeinformation als Verifizierungsinformation über eine sichere Kommunikationsschnittstelle übertragbar ist.

Bei einer vorteilhaften Ausgestaltung bestimmt die erste Rechnereinheit aus dem Sensorsignal des zweiten Sensors einen vierten Wert der Geschwindigkeit des Mobilteils anders als den zweiten Wert und überwacht diesen vierten Wert auf Überschreiten eines zulässigen Maßes an Abweichung von einem der anderen Werte. Von Vorteil ist dabei, dass die Sicherheit durch diese Überwachung erhöht ist und somit eine entsprechende Freigabeinformation als Verifizierungsinformation über eine sichere Kommunikationsschnittstelle übertragbar ist. Denn durch Anwendung einer anderen Abtastrate des Sensorsignals des zweiten Sensors und/oder durch eine andere Filterung unterscheidet sich der vierte Wert vom zweiten Wert. Solange der Unterschied klein genug ist, liegt kein Fehler vor. Wenn jedoch ein kritisches Maß an Abweichung überschritten ist, liegt ein Fehler vor. Beispielsweise wird der vierte Wert mit einer niedrigen Abtastrate bestimmt und der zweite Wert überschreitet den vierten Wert um ein kritisches Maß an Abweichung. Dies ist beispielsweise dann der Fall, wenn der zweite Sensor einer plötzlichen unzulässigen Einwirkung, insbeosndere unzulässig hoher Ruck, ausgesetzt ist.

Bei einer vorteilhaften Ausgestaltung bestimmt die zweite Rechnereinheit aus dem Sensorsignal des zweiten Sensors einen vierten Wert der Geschwindigkeit des Mobilteils und überwacht auf Überschreiten eines zulässigen Maßes an Abweichung von einem der anderen Werte. Von Vorteil ist dabei, dass die Sicherheit durch diese Überwachung erhöht ist und somit eine entsprechende Freigabeinformation als Verifizierungsinformation über eine sichere Kommunikationsschnittstelle übertragbar ist.

Bei einer vorteilhaften Ausgestaltung ist die erste Rechnereinheit zur zweiten Rechnereinheit diversitär ausgeführt. Von Vorteil ist dabei, dass die Sicherheit erhöht ist und systematische Fehler unwahrscheinlicher sind.

Bei einer vorteilhaften Ausgestaltung ist die erste Rechnereinheit unterschiedlich zur zweiten Rechnereinheit ausgeführt. Von Vorteil ist dabei, dass die Sicherheit erhöht ist und systematische Fehler unwahrscheinlicher sind.

Bei einer vorteilhaften Ausgestaltung weist die Sensoranordnung einen sicherheitsgerichteten elektrischen Ausgang auf,
insbesondere wobei über den Ausgang ein Abschaltsignal oder ein Befehl zum Aktivieren eines sicheren Zustands bereit stellbar ist,
insbesondere welcher über einen oder mehrere Kontakte eines im oder am Gehäuse angeordneten Steckverbinderteils verfügbar ist. Von Vorteil ist dabei, dass die Sicherheit erhöht ist, indem ein sicheres Freigabesignal und Abschaltsignal bereitstellbar ist.

Bei einer vorteilhaften Ausgestaltung weist die Sensoranordnung eine sicherheitsgerichtete elektrische Kommunikationsschnittstelle auf,
insbesondere welche über einen oder mehrere Kontakte eines im oder am Gehäuse angeordneten Steckverbinderteils verfügbar ist. Von Vorteil ist dabei, dass die Geschwindigkeitswerte einer Regeleinheit einer Steuerung des Mobilteils bereitstellbar sind, so dass die erfasste Geschwindigkeit, also Ist-Wert der Geschwindigkeit, des Antriebs des Mobilteils auf einen Sollwert der Geschwindigkeit hingeregelt wird. Für dieses Regeln sind auch nicht sichere Geschwindigkeitswerte verwendbar, also beispielsweise alle die aus dem Sensorsignal des ersten Sensors, insbesondere Radarsensors, bestimmten Geschwindigkeitswerte. Die zusätzlich auf der Kommunikationsschnittstelle übertragenen Verifizierungsinformationen sind von einer Sicherheitssteuerung des Mobilteils für eine Regelung verwendbar, so dass eine Abschaltung oder ein anderweitig sicherer Zustand, wie beispielsweise das sichere Einhalten einer konstanten Geschwindigkeit eingeleitet werden kann. Die Sicherheitssteuerung ist nur für sicherheitsrelevante Aufgaben zuständig. Die andere Steuerung des Mobilteils ist für die sonstigen Aufgaben zuständig, wobei
insbesondere sicherheitsrelevante Aktionen von der Sicherheitssteuerung direkt und/oder indirekt überwacht werden.

Bei einer vorteilhaften Ausgestaltung sind über die Kommunikationsschnittstelle Werte und zugehörige Verifizierungsinformation von der Sensoranordnung an eine Steuerung des Mobilteils, insbesondere an einen Regler, insbesondere Geschwindigkeitsregler der Steuerung des Mobilteils, übertragbar,
insbesondere wobei neben den Geschwindigkeitswerten die Verifizierungsinformation bidirektional durch die Kommunikationsschnittstelle übertragen wird. Von Vorteil ist dabei, dass die sicherheitsrelevanten Informationen von einer Sicherheitsgerichteten Steuerung, insbesondere Sicherheitssteuerung, verwendet werden. Jedoch sind die Geschwindigkeitswerte von der Regelung verwendbar, auch wenn die Verifizierungsinformation negativ ist, also ein unsicherer Zustand erreicht ist. Dabei wirkt ein sicherheitsgerichtetes Abschaltsignal auf den Antrieb des Mobilteils, so dass die Stellgröße des Reglers im Sicherheitsfall wirkungslos werden kann.

Erfindungsgemäß ist der transparente Bereich des Gehäuses ein Teilbereich des Gehäuses und der Radarsensor ist weiter entfernt von dem transparenten Teilbereich als vom restlichen, insbesondere für Licht undurchlässigen Gehäuse. Von Vorteil ist dabei, dass der Lichtsensor direkt hinter dem transparenten Bereich platzierbar ist und der Radarsensor weiter entfernt vom transparenten Bereich als der Lichtsensor.

Weitere Vorteile ergeben sich aus den Unteransprüchen.

Die Erfindung wird nun anhand von schematischen Abbildungen näher erläutert:

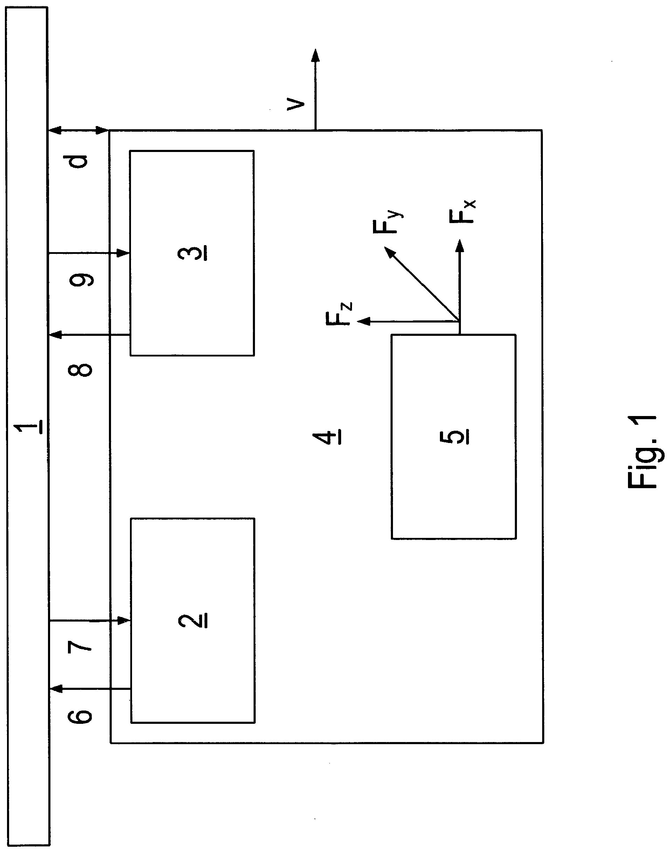

In der Figur 1 ist ein erfindungsgemäßes auf einer Verfahrfläche 1, insbesondere Verfahrebene oder Schiene, bewegbares Mobilteilteil mit Sensoranordnung schematisch skizziert.

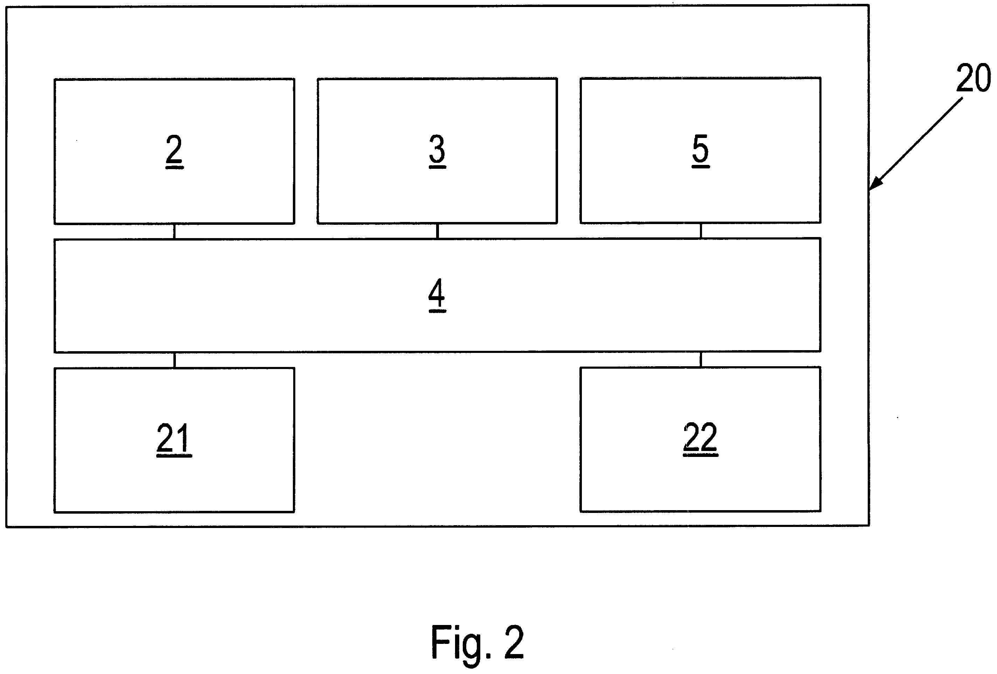

In der Figur 2 ist die Sensoranordnung mit ihrem Gehäuse 20 schematisch skizziert.

Wie in den Figuren dargestellt, ist ein Mobilteil auf einer Verfahrfläche 1 bewegbar. Wenn die Verfahrfläche 1 zweidimensional ausgeführt ist, ist das Mobilteil ein auf einer Ebene in mindestens zwei zueinander nicht parallelen Raumrichtungen bewegbar. Beispielsweise fungiert dann das Mobilteil als fahrerloses Transportsystem FTS oder als intralogistischer Assistenz MLA oder als automatisch geführtes Fahrzeug AGV.

Wenn die Verfahrfläche 1 nur eindimensional, also als schiene, ausgeführt ist, fungiert das Mobilteil als Schienenfahrzeug.

Vorzugsweise an der Unterseite des Mobilteils ist die Sensoranordnung angeordnet, welche ein Gehäuse 20 aufweist, das am Fahrgestellt des Mobilteils befestigt ist, insbesondere angeschraubt ist.

Das Gehäuse 20 ist vorzugsweise aus Kunststoff ausgeführt.

Die Sensoranordnung weist einen Radarsensor 2 auf, dessen gesendete Radarstrahlen 6 und empfangene Radarstrahlen 7 somit durch das Gehäuse 20 durchdringen.

Das Gehäuse 20 weist zumindest an einem Teilbereich oder als Ganzes eine für Licht transparente Oberfläche auf, so dass das vom Lichtsensor 3 gesendete Licht und empfangene Licht durch diese transparente Oberfläche durchdringen.

Die Sensoranordnung weist außerdem einen dreidimensionalen Beschleunigungssensor 5 auf. Vorzugsweise ist dieser durch drei jeweils senkrecht zueinander angeordnete Dehnungsmessstreifen gebildet, so dass die Auslenkung einer Masse in den jeweiligen Richtungen detektierbar ist und daraus auf den räumlichen Beschleunigungsdetektor geschlossen werden kann.

Aus den Sensorsignalen wird von einer Auswerteelektronik 4, die ebenfalls innerhalb des Gehäuses 20 der Sensoranordnung angeordnet ist, jeweils die Geschwindigkeit des Mobilteils relativ zur Verfahrfläche 1 bestimmt.

Am Gehäuse 20 ist ein Steckverbinderteil angeordnet, so dass dem Mobilteil einerseits ein sicherer zweikanaliger elektrischer Ausgang 21 bereitstellbar ist und andererseits eine sichere Kommunikationsschnittstelle 22.

Die Auswerteelektronik 4 weist eine erste Rechnereinheit, insbesondere Mikroprozessor, und eine zweite Rechnereinheit, insbesondere Mikroprozessor, auf, welche die aus dem Sensorsignal des Radarsensors 2 bestimmte Geschwindigkeit mit der aus dem Sensorsignal des Lichtsensors 3 bestimmten Geschwindigkeit vergleichen. Wenn dabei ein zulässiges Maß an Abweichung überschritten wird, wird ein STO - Signal erzeugt, also ein Befehlssignal zum Einleiten eines sicheren Zustandes, insbesondere also ein Abschaltsignal.

Die beiden Rechnereinheiten sind nicht identisch ausgeführt, sondern verschiedenartig. Der Vergleich wird kreuzweise ausgeführt. Dies bedeutet, dass jede der beiden Rechnereinheiten die beiden Geschwindigkeitssignale miteinander vergleicht und auf Überschreiten des zulässigen Maßes an Abweichung überwacht.

Das STO-Signal wird über den sicheren Ausgang 21 als binäres Signal der Steuerung des Mobilteils zugeleitet und außerdem auch einer Sicherheitssteuerung, die zusätzlich auf dem Mobilteil angeordnet ist und ebenfalls ein Abschaltsignal erzeugen kann.

Außerdem werden die bestimmten Geschwindigkeitswerte über die sichere Kommunikationsschnittstelle 22 weitergeleitet. Dabei wird zusätzlich zu den bestimmten Geschwindigkeitswerten auch sicherheitsgerichtete Information ausgetauscht, also bidirektional übertragen. Die sicherheitsgerichtete Information ist auch als Verifizierungsinformation bezeichenbar. Dabei wird zu den übertragenen Datenpaketen eine jeweilige Prüfinformation übertragen und vom Empfänger wiederum bestätigt, wenn sie korrekt übertragen wurde.

Auf jeden Fall werden aber die an der Kommunikationsschnittstell 22 bereit gestellten Geschwindigkeitswerte einer Reglereinheit der Steuerung des Mobilteils zugeführt. Somit ist die Geschwindigkeit mit dem gegebenenfalls nicht als sicher bestätigten erfassten Geschwindigkeitswerten als Istwerten auf einen Sollwert hin regelbar.

Bei weiteren erfindungsgemäßen Ausführungsbeispielen wird statt des Radarsensors 2 ein Sensor mit erstem physikalischem Wirkprinzip zur Erfassung der Geschwindigkeitswerte verwendet und statt des Lichtsensors 3 ein Sensor mit zweiten physikalischem Wirkprinzip, wobei das erste Wirkprinzip unterschiedlich ist zum zweiten Wirkprinzip.

Bei weiteren erfindungsgemäßen Ausführungsbeispielen werden statt der Geschwindigkeitswerte die Positionsdaten, insbesondere Winkelwerte, ermittelt und übertragen. Zur Geschwindigkeitsregelung wird als Istwert der Geschwindigkeit das zeitlich differenzierte Signal verwendet.

### Bezugszeichenliste

1 Verfahrfläche, insbesondere Schiene
2 Radarsensor
3 Lichtsensor
4 Auswerteelektronik
5 Beschleunigungssensor
6 Ausgesendeter Radarstrahl
7 Empfangener Radarstrahl
8 Ausgesendetes Licht
9 empfangenes Licht
20 Gehäuse
21 sicherer zweikanaliger elektrischer Ausgang
22 sichere Kommunikationsschnittstelle

## Patentansprüche

1. Anlage mit auf einer Verfahrfläche der Anlage bewegbarem Mobilteil,
**wobei** am Mobilteil, insbesondere an der Unterseite des Mobilteils, eine Sensoranordnung befestigt ist,
wobei die Sensoranordnung ein Gehäuse, insbesondere ein Kunststoffgehäuse, aufweist,
wobei innerhalb des Gehäuses ein erster Sensor, der nach einem ersten physikalischen Wirkprinzip arbeitet, und ein zweiter Sensor, der nach einem zweiten physikalischen Wirkprinzip arbeitet, angeordnet ist,
wobei das erste Wirkprinzip unterschiedlich zum zweiten Wirkprinzip ist,
wobei das Sensorsignal des ersten Sensors, insbesondere die Sensorsignale der beiden Sensoren, einer ersten Rechnereinheit einer innerhalb des Gehäuses angeordneten Auswerteelektronik zuführbar ist,
wobei das Sensorsignal des zweiten Sensors, insbesondere die Sensorsignale der beiden Sensoren, einer zweiten Rechnereinheit der Auswerteelektronik zuführbar sind,
wobei die erste Rechnereinheit dazu ausgebildet ist, aus dem Sensorsignal des ersten Sensors einen ersten Wert der Geschwindigkeit des Mobilteils zu bestimmen,
wobei die zweite Rechnereinheit dazu ausgebildet ist aus dem Sensorsignal des zweiten Sensors einen zweiten Wert der Geschwindigkeit des Mobilteils zu bestimmen und auf Überschreiten eines zulässigen Maßes an Abweichung vom ersten Wert zu überwachen,
**wobei der erste Sensor ein Radarsensor und der zweite Sensor ein Lichtsensor ist,**
**wobei** das Gehäuse derart ausgestaltet ist, dass **die vom Lichtsensor gesendeten und empfangenen Lichtstrahlen einen transparenten Bereich des Gehäuses** durchdringen können, und
**wobei der transparente Bereich des Gehäuses ein Teilbereich des Gehäuses ist und der Radarsensor weiter entfernt von dem transparenten Teilbereich ist als vom restlichen, insbesondere für Licht undurchlässigen Gehäuse.**

2. Anlage nach Anspruch 1,
wobei die Verfahrfläche eine zweidimensionale Fläche, insbesondere der Boden der Anlage, ist oder dass die Verfahrfläche eine Schiene ist und das Mobilteil ein auf der Schiene bewegbares Schienenfahrzeug.

3. Anlage nach einem der vorangegangenen Ansprüche,
wobei innerhalb des Gehäuses ein dritter Sensor angeordnet ist, der nach einem dritten physikalischen Wirkprinzip arbeitet, das unterschiedlich zum ersten und zum zweiten Wirkprinzip ist,
insbesondere wobei der dritte Sensor ein Beschleunigungssensor, insbesondere ein dreidimensionaler Beschleunigungssensor, ist,
insbesondere wobei der Beschleunigungssensor für jede der Dimensionen zumindest einen Dehnungsmessstreifen aufweist, welcher die Auslenkung einer Masse detektierbar macht.

4. Anlage nach einem der vorangegangenen Ansprüche,
wobei die zweite Rechnereinheit dazu ausgebildet ist aus dem Sensorsignal des ersten Sensors einen dritten Wert der Geschwindigkeit des Mobilteils zu bestimmen, und insbesondere auf Überschreiten eines zulässigen Maßes an Abweichung vom ersten und/oder zweiten Wert zu überwachen.

5. Anlage nach einem der vorangegangenen Ansprüche,
wobei die erste Rechnereinheit dazu ausgebildet ist aus dem Sensorsignal des zweiten Sensors einen vierten Wert der Geschwindigkeit des Mobilteils zu bestimmen und auf Überschreiten eines zulässigen Maßes an Abweichung von einem der anderen Werte zu überwachen.

6. Anlage nach einem der vorangegangenen Ansprüche,
wobei die zweite Rechnereinheit dazu ausgebildet ist aus dem Sensorsignal des zweiten Sensors einen vierten Wert der Geschwindigkeit des Mobilteils anders als den zweiten Wert der Geschwindigkeit zu bestimmen und auf Überschreiten eines zulässigen Maßes an Abweichung von einem der anderen Werte zu überwachen, und
bei der Bestimmung des vierten Wertes eine andere Abtastrate des Sensorsignals und/oder eine andere Filterung anzuwenden als bei der Bestimmung des zweiten Wertes.

7. Anlage nach einem der vorangegangenen Ansprüche,
wobei die erste Rechnereinheit zur zweiten Rechnereinheit diversitär ausgeführt ist,
insbesondere also unterschiedliche Realisierungen für redundante Einzelkomponenten der ersten und zweiten Rechnereinheit verwendet werden, insbesondere zur Verringerung des Risikos eines gleichzeitigen Ausfalls der beiden redundanten Komponenten.

8. Anlage nach einem der vorangegangenen Ansprüche,
wobei die erste Rechnereinheit unterschiedlich zur zweiten Rechnereinheit ausgeführt ist.

9. Anlage nach einem der vorangegangenen Ansprüche,
wobei die Sensoranordnung einen sicherheitsgerichteten elektrischen Ausgang aufweist,
insbesondere wobei über den Ausgang ein Abschaltsignal oder ein Befehl zum Aktivieren eines sicheren Zustands bereit stellbar ist,
insbesondere welcher über einen oder mehrere Kontakte eines im oder am Gehäuse angeordneten Steckverbinderteils verfügbar ist.

10. Anlage nach einem der vorangegangenen Ansprüche,
wobei die Sensoranordnung eine sicherheitsgerichtete elektrische Kommunikationsschnittstelle aufweist,
insbesondere welche über einen oder mehrere Kontakte eines im oder am Gehäuse angeordneten Steckverbinderteils verfügbar ist.

11. Anlage nach einem der vorangegangenen Ansprüche,
wobei über die Kommunikationsschnittstelle Werte von der Sensoranordnung an eine Steuerung des Mobilteils, insbesondere an einen Regler, insbesondere Geschwindigkeitsregler der Steuerung des Mobilteils, übertragbar sind und zugehörige Verifizierungsinformation,
insbesondere wobei neben den Geschwindigkeitswerten die Verifizierungsinformation bidirektional durch die Kommunikationsschnittstelle übertragbar ist.

## Claims

1. Facility comprising a movable part which is movable on a movement surface of the facility,
wherein a sensor assembly is fastened to the movable part, in particular to the underside of the movable part,
wherein the sensor assembly comprises a housing, in particular a plastic housing,
wherein a first sensor, which operates in accordance with a first physical operating principle, and a second sensor, which operates in accordance with a second physical operating principle, are arranged within the housing,
wherein the first operating principle is different than the second operating principle,
wherein the sensor signal of the first sensor, in particular the sensor signals of both sensors, can be fed to a first computing unit of an evaluation electronics arranged within the housing,
wherein the sensor signal of the second sensor, in particular the sensor signals of both sensors, can be fed to a second computing unit of the evaluation electronics,
wherein the first computing unit is designed to determine a first value of the speed of the movable part from the sensor signal of the first sensor,
wherein the second computing unit is designed to determine a second value of the speed of the movable part from the sensor signal of the second sensor and to monitor it for exceeding a permissible extent of deviation from the first value,
wherein the first sensor is a radar sensor and the second sensor is a light sensor,
wherein the housing is configured in such a way that the light beams emitted and received by the light sensor can penetrate a transparent region of the housing, and
wherein the transparent region of the housing is a portion of the housing and the radar sensor is further away from the transparent portion than from the rest of the housing, which in particular is opaque to light.

2. Facility according to claim 1,
wherein the movement surface is a two-dimensional surface, in particular the floor of the facility,
or in that
the movement surface is a rail and the movable part is a rail vehicle which is movable on the rail.

3. Facility according to any one of the preceding claims,
wherein a third sensor is arranged within the housing, which third sensor operates in accordance with a third physical operating principle, which is different than the first and the second operating principle,
in particular wherein the third sensor is an acceleration sensor, in particular a three-dimensional acceleration sensor, in particular wherein the acceleration sensor comprises, for each of the dimensions, at least one strain gauge which makes it possible to detect the deflection of a mass.

4. Facility according to any one of the preceding claims,
wherein the second computing unit is designed to determine a third value of the speed of the movable part from the sensor signal of the first sensor and to monitor it for exceeding a permissible extent of deviation from the first and/or second value.

5. Facility according to any one of the preceding claims,
wherein the first computing unit is designed to determine a fourth value of the speed of the movable part from the sensor signal of the second sensor and to monitor it for exceeding a permissible extent of deviation from one of the other values.

6. Facility according to any one of the preceding claims,
wherein the second computing unit is designed to determine a fourth value of the speed of the movable part, which is different than the second value of the speed, from the sensor signal of the second sensor and to monitor it for exceeding a permissible extent of deviation from one of the other values, and to use, when determining the fourth value, a different sampling rate of the sensor signal and/or a different filtering than when determining the second value.

7. Facility according to any one of the preceding claims,
wherein the first computing unit is embodied diversely in relation to the second computing unit, i.e. in particular different implementations are used for redundant individual components of the first and the second computing unit, in particular in order to reduce the risk of a simultaneous failure of the two redundant components.

8. Facility according to any one of the preceding claims,
wherein the first computing unit is embodied differently than the second computing unit.

9. Facility according to any one of the preceding claims,
wherein the sensor assembly comprises a safety-oriented electrical output,
in particular wherein a switch-off signal or a command to activate a safe state can be provided via the output,
in particular which is available via one or more contacts of a plug-in connector part arranged in or on the housing.

10. Facility according to any one of the preceding claims,
wherein the sensor assembly comprises a safety-oriented electrical communication interface,
in particular which is available via one or more contacts of a plug-in connector part arranged in or on the housing.

11. Facility according to any one of the preceding claims,
wherein values from the sensor assembly can be transmitted via the communication interface to a controller of the movable part, in particular to a regulator, in particular a speed regulator of the controller of the movable part, as well as associated verification information,
in particular wherein, in addition to the speed values, the verification information can be transmitted bidirectionally via the communication interface.

## Revendications

1. Installation comprenant une partie mobile pouvant être déplacée sur une surface de déplacement de l'installation,
un ensemble de capteurs étant fixé à la partie mobile, en particulier au niveau de la face inférieure de la partie mobile,
l'ensemble de capteurs présentant un boîtier, en particulier un boîtier en plastique, un premier capteur fonctionnant selon un premier principe de fonctionnement physique et un deuxième capteur fonctionnant selon un deuxième principe de fonctionnement physique étant agencés à l'intérieur du boîtier,
le premier principe de fonctionnement étant différent du second principe de fonctionnement,
le signal de capteur du premier capteur, en particulier les signaux de capteur des deux capteurs, pouvant être transmis à une première unité de calcul d'une électronique d'évaluation agencée à l'intérieur du boîtier,
le signal de capteur du deuxième capteur, en particulier les signaux de capteur des deux capteurs, pouvant être transmis à une deuxième unité de calcul de l'électronique d'évaluation,
la première unité de calcul étant conçue pour déterminer une première valeur de la vitesse de la partie mobile à partir du signal de capteur du premier capteur,
la deuxième unité de calcul étant conçue pour déterminer une deuxième valeur de la vitesse de la partie mobile à partir du signal de capteur du deuxième capteur et pour surveiller le dépassement d'une mesure admissible de l'écart par rapport à la première valeur,
le premier capteur étant un capteur radar et le second capteur étant un capteur de lumière,
le boîtier étant conçu de manière à ce que les rayons lumineux émis et reçus par le capteur de lumière puissent pénétrer dans une région transparente du boîtier, et
la région transparente du boîtier étant une sous-région du boîtier et le capteur radar étant plus éloigné de la sous-région transparente que du reste du boîtier, en particulier imperméable à la lumière.

2. Installation selon la revendication 1,
la surface de déplacement, en particulier le sol de l'installation, étant une surface bidimensionnelle.
ou
la surface de déplacement étant une voie ferrée et la partie mobile étant un véhicule ferroviaire pouvant être déplacé sur la voie ferrée.

3. Installation selon l'une quelconque des revendications précédentes,
un troisième capteur, qui fonctionne selon un troisième principe de fonctionnement physique différent des premier et deuxième principes de fonctionnement, étant agencé à l'intérieur du boîtier,
le troisième capteur étant en particulier un capteur d'accélération, en particulier un capteur d'accélération tridimensionnel,
le capteur d'accélération présentant en particulier pour chacune des dimensions au moins une jauge de déformation qui rend détectable la déviation d'une masse.

4. Système selon l'une quelconque des revendications précédentes,
la deuxième unité de calcul étant conçue pour déterminer une troisième valeur de la vitesse de la partie mobile à partir du signal de capteur du premier capteur et en particulier pour surveiller le dépassement d'une quantité admissible d'écart par rapport à la première et/ou à la deuxième valeur.

5. Système selon l'une quelconque des revendications précédentes,
la première unité de calcul étant conçue pour déterminer une quatrième valeur de la vitesse de la partie mobile à partir du signal de capteur du deuxième capteur et pour surveiller le dépassement d'un niveau admissible d'écart par rapport à l'une des autres valeurs.

6. Système selon l'une quelconque des revendications précédentes,
la deuxième unité de calcul étant conçue pour déterminer, à partir du signal de capteur du deuxième capteur, une quatrième valeur de la vitesse de la partie mobile différente de la deuxième valeur de la vitesse et pour surveiller le dépassement d'une mesure admissible d'écart par rapport à l'une des autres valeurs et pour appliquer, lors de la détermination de la quatrième valeur, une fréquence d'échantillonnage du signal de capteur et/ou un filtrage différent(e) de celui ou de celle appliqué(e) lors de la détermination de la deuxième valeur.

7. Système selon l'une quelconque des revendications précédentes,
la première unité de calcul étant conçue de manière diverse par rapport à la deuxième unité de calcul, des réalisations différentes étant en particulier utilisées pour des composants individuels redondants des première et deuxième unités de calcul, en particulier afin de réduire le risque de défaillance simultanée des deux composants redondants.

8. Installation selon l'une quelconque des revendications précédentes,
la première unité de calcul étant réalisée différemment de la deuxième unité de calcul.

9. Installation selon l'une quelconque des revendications précédentes,
l'ensemble de capteurs présentant une sortie électrique de sécurité,
un signal d'arrêt ou une commande permettant d'activer un état de sécurité pouvant être en particulier fourni par l'intermédiaire de la sortie,
et étant en particulier disponible par l'intermédiaire d'un ou de plusieurs contact(s) d'une partie connecteur enfichable agencée dans ou au niveau du boîtier.

10. Installation selon l'une quelconque des revendications précédentes,
l'ensemble de capteurs présentant une interface de communication électrique de sécurité,
et étant en particulier disponible par l'intermédiaire d'un ou de plusieurs contact(s) d'une partie connecteur enfichable agencée dans ou au niveau du boîtier.

11. Système selon l'une quelconque des revendications précédentes,
des valeurs, et des informations de vérification associées, pouvant être transmises de l'ensemble de capteurs vers une commande de la partie mobile, en particulier vers un régulateur, en particulier vers un régulateur de vitesse de la commande de la partie mobile, par l'intermédiaire de l'interface de communication,
les informations de vérification pouvant en particulier être transmise de manière bidirectionnelle en plus des valeurs de vitesse grâce à l'interface de communication.
